# EUROPÄISCHE PATENTANMELDUNG

(11) **EP 1 129 793 A2**
(43) Veröffentlichungstag der Anmeldung: **05.09.2001**
(21) Anmeldenummer: 01103911.2
(22) Anmeldetag: 17.02.2001
(51) Int. Cl.: B08B 3/02, B23Q 11/00, B05B 1/26

(54) **Vorrichtung zum Entfernen von Spänen bei Werkzeugmaschinen**

(30) Priorität: 03.03.2000 DE 10010157
(71) Anmelder: GROB-Werke Dr. h.c. mult. Dipl.-Ing. Burkhart Grob e.K., 87719 Mindelheim (DE)
(72) Erfinder: Mayer, Stefan, 86853 Langerringen (DE)
(74) Vertreter: Pfister, Helmut, Dipl.-Ing.

(57) **Zusammenfassung**

Der Flüssigkeitsstrahl (15), der zur Ableitung der Späne der Werkzeugmaschinen (8) dient, wird gegen ein drehbares Leitblech (6) gerichtet, wodurch sich eine Ablenkung des Strahles (15) der Spülflüssigkeit ergibt. Hierdurch können mit einem starken Strahl die zu reinigenden Flächen gut erreicht werden.

## Beschreibung

Die Erfindung betrifft eine Vorrichtung zum Entfernen von Spänen, die bei der Bearbeitung von Werkstücken in Werkzeugmaschinen anfallen, wobei ein aus Spülflüssigkeit bestehender Strahl unter Druck gegen Flächen gerichtet ist, auf denen sich die Späne ablagern um diese mit der Spülflüssigkeit in Ableitungseinrichtungen für die Späne einzufördern, mit einem Spülkopf mit einer Düse, aus der die Spülflüssigkeit austritt und mit Einrichtungen zur Veränderung der Richtung des Strahles.

Eine Vorrichtung der vorstehend angegebenen Gattung ist beispielsweise bekannt geworden durch das Dokument WO 98/03301. Bei dieser bekannten Vorrichtung ist eine Vielfachsprühdüse vorgesehen, deren Kopf beweglich angeordnet ist und wobei der Kopf Sprühöffnungen aufweist. Durch die bewegliche Anordnung des Kopfes wird erreicht, daß die Flüssigkeitsstrahlen periodisch den Bereich überstreichen, aus dem die Späne abgeleitet werden sollen.

Die Aufteilung der Spülflüssigkeit in eine Vielzahl von einzelnen Flüssigkeitsstrahlen hat zur Folge, daß bei Durchtritt durch den beweglichen Kopf der Sprühdüse ein erheblicher Widerstand zu überwinden ist, was eine entsprechende Dimensionierung der Zu förderpumpen bedingt. Die mechanische Energie des einzelnen Flüssigkeitsstrahles ist auch vergleichsweise gering, so daß eine sichere Späneabfuhr eine hinreichende Flüssigkeitszufuhr mit entsprechender Pumpleistung voraussetzt.

Der Erfindung liegt die Aufgabe zugrunde, eine Anordnung zu treffen, bei der der Aufwand an Spülflüssigkeitsmenge einerseits und Spüldruck andererseits in mäßigen Grenzen gehalten werden kann.

Die erfindungsgemäße Lösung geht aus von einer Vorrichtung der eingangs angegebenen Gattung. Erfindungsgemäß wird vorgeschlagen, daß der aus der Düse austretende Strahl auf eine Leitfläche trifft, die den Strahl ablenkt, wobei die Leitfläche beweglich angeordnet ist, um die Auftreffrichtung des Strahles auf die Leitfläche und damit die Ablenkung zu verändern.

Bei der Erfindung wird der Strahl abgelenkt, so daß es ohne weiteres möglich ist, den gesamten Raum, aus dem Späne abzufördern sind, zu erreichen. Dennoch wird der Strahl nicht in eine Vielzahl von Einzelstrahlen aufgeteilt, so daß der Strahl noch eine verhältnismäßig große kinetische Energie besitzt, um die Späne in gewünschter Weise wegzuspülen. Zwar wird der Strahl bei der Ablenkung auf der Leitfläche in seiner Querschnittsabmessung etwas vergrößert, dies wirkt sich aber nicht nachteilig aus. Als Vorteil wird dabei erhalten, daß der Strahl auf eine größere Fläche trifft und nicht auf eine einzige Stelle konzentriert bleibt. Die Beweglichkeit der Leitfläche wiederum sichert, daß eine großflächige Wirkung erreicht wird.

Die Leitfläche kann bei der Erfindung eine gleichförmige Bewegung ausführen. Sie kann beispielsweise hin- und herbewegt werden beziehungsweise sich hin- und herbewegen. In der Regel wird man aber die Leitfläche mit einer Drehlagerung versehen.

Bei einer Ausführungsform der Erfindung kann die Leitfläche mit einem besonderen Antrieb versehen sein, um die gewünschten Bewegungen zu erhalten. Besser ist es jedoch, wenn die Leitfläche vom Rückstoß der Spülflüssigkeit bewegt wird, da hierdurch einerseits ein sicherer Antrieb erhalten wird, andererseits der Aufwand für einen zusätzlichen Antrieb eingespart wird. Die Energie für die Bewegung der Leitfläche ist gering und wirkt sich nicht nennenswert auf die kinetische Energie des Strahles aus.

Bei der bevorzugten Ausführungsform der Erfindung ist das bewegliche Element ein Leitblech. Dieses Leitblech hat ein relativ geringes Gewicht, es läßt sich rasch in Drehung versetzen. Bei Beschädigung oder Verschleiß kann es leicht ausgetauscht werden.

Das Leitblech beziehungsweise die Leitfläche und deren Drehlagerung kann in einiger Entfernung von der Düse angeordnet sein. Für eine einfache Montage ist es jedoch günstig, wenn die Drehlagerung der Leitfläche beziehungsweise des Leitbleches und die Düse baulich verbunden sind. Dies kann insbesondere dadurch geschehen, daß die Drehlagerung die Düse umgibt. In der Regel stimmen dann die Drehachse und die Mittelachse der Düse überein.

Die Drehlagerung besteht insbesondere mindestens aus einem Innenring und einem Außenring. An einem der Ringe ist das Leitblech beziehungsweise die Leitfläche befestigt. Zwischen den Ringen sind vorzugsweise Wälzkörper angeordnet.

Es ist gefunden worden, daß es günstig ist, wenn das Leitblech im spitzen Winkel zur Strahlrichtung angeordnet ist und von der Seite in den Spülflüssigkeitsstrahl hineinragt. Die Umlenkung des Strahles durch das Leitblech verringert die kinetische Energie des Strahls nur wenig. Es ist klar, daß das Leitblech derart anzuordnen ist, daß bei der Strahlumlenkung eine bezüglich der Drehachse des Leitbleches tangentiale Kraft entsteht, was sich durch eine geeignete Neigung des Leitbleches leicht erreichen läßt. Das Leitblech ist vorzugsweise in sich mehrfach abgewinkelt.

Es ist günstig, wenn die Leitfläche in sich gekrümmt ist. Die Leitfläche kann insbesondere nach Art einer Turbinenschaufelfläche geformt sein.

In bestimmten Fällen kann es sich empfehlen, die Drehlagerung gegenüber der Spülfüssigkeit abzudichten. Dies ist dann zu empfehlen, wenn die Spülflüssigkeit Verunreinigungen oder Bestandteile enthält, die das Drehlager beeinträchtigen, beziehungsweise beschädigen würden. In den Fällen, in denen dies nicht zu befürchten ist, ist es günstig, wenn die Drehlagerung von einem Teil der Spülflüssigkeit durchströmt ist, so daß die Spülflüssigkeit als Schmiermittel benützt wird.

In der Zeichnung ist ein Ausführungsbeispiel der Erfindung schematisch dargestellt. Es zeigen:
- Fig. 1: eine schematische Darstellung einer Werkzeugmaschine mit einer erfindungsgemäßen Vorrichtung;
- Fig. 2: einen vergrößerten Längsschnitt durch eine erfindungsgemäße Vorrichtung und
- Fig. 3: einen Schnitt durch die Darstellung der Fig. 2 entsprechend der Schnittlinie III-III.

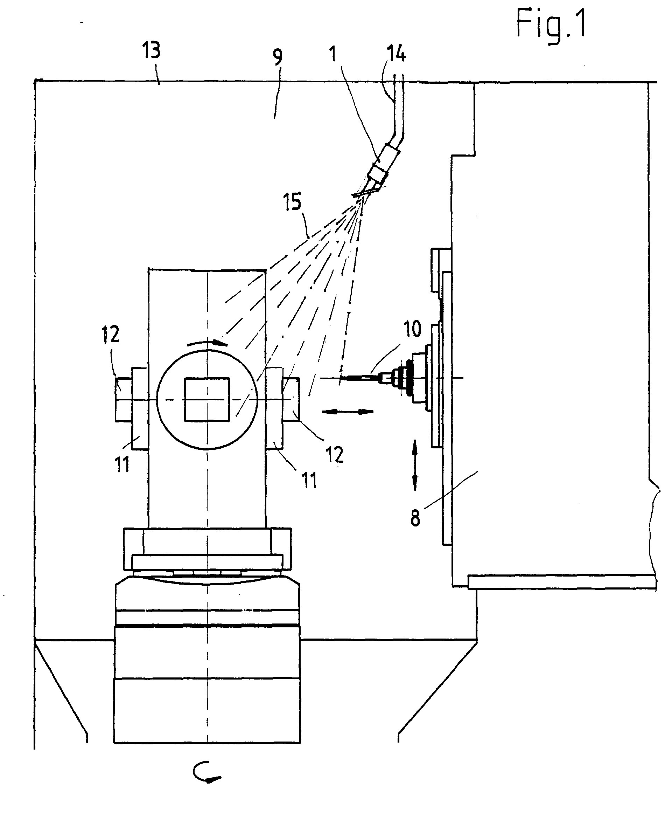

In der Fig. 1 ist eine Werkzeugmaschine 8 gezeigt mit einem zum Beispiel allseits geschlossenen Raum 9, in den der Bearbeitungskopf 10 der Werkzeugmaschine hineinragt und in dem auch die Aufspanneinrichtung 11 mit den Werkstücken 12 angeordnet ist. An der Decke 13 des Raumes 9 ist der stationäre Spritzkopf 1 angeordnet und bildet beispielsweise das Ende der Spülflüssigkeitsleitung 14. Die Anordnung des Kopfes der Düse erfolgt vorzugsweise derart, daß der abgelenkte Flüssigkeitsstrahl 15 auf die Ablagerungsflächen für die Späne gerichtet ist. Der Flüssigkeitsstrahl wird insgesamt bei einer vollen Umdrehung der Leitfläche ungefähr die Form eines Kegels bilden, wobei jedoch zu beachten ist, daß der Flüssigkeitsstrahl nicht nur auf die Form eines Kegelmantels abgelenkt wird, sondern auch das Innere des Kegels erreicht wird. Dieser Kopf 1 kann beispielsweise mit seiner Mittelachse senkrecht nach unten gerichtet sein, es ist aber auch eine winklige Anordnung zur Vertikalen günstig, wie diese beispielsweise aus der Fig. 1 hervorgeht.

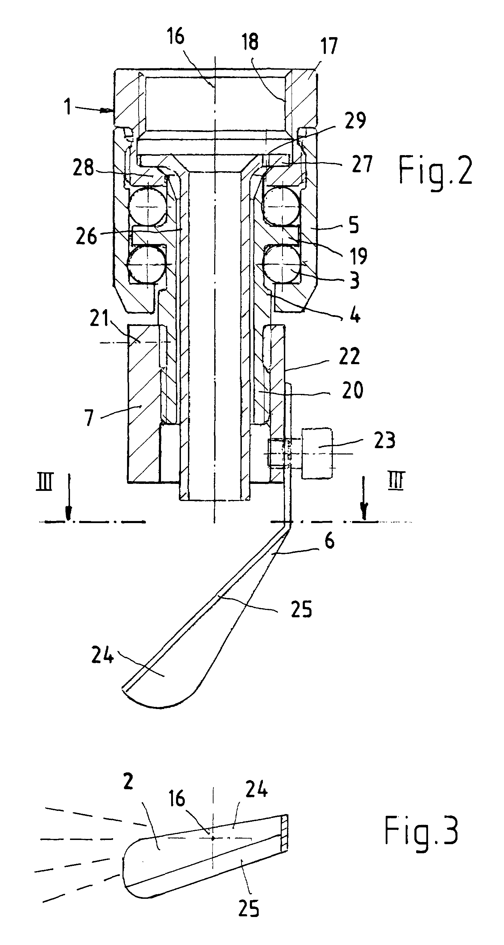

Die Einzelheiten des Kopfs 1 und der dazugehörigen Einrichtungen ergeben sich aus den Darstellungen der Fig. 2 und 3. Der Kopf besteht aus einem Grundkörper 17 mit einem Innengewinde 18 zur Befestigung an der Spülflüssigkeitsleitung 14. Der Grundkörper 17 trägt den Außenring 5 der Drehlagerung. Der Innenring ist mit 4 bezeichnet. Der Bund 19 trennt die beiden Wälzlagerringe 3.

Der Innenring 4 ist mit einer Verlängerung 20 versehen und diese Verlängerung 20 besitzt ein Außengewinde zur Befestigung des als Befestigungsmittel 7 dienenden Rohrteiles, das das Leitblech 6 trägt. Das Befestigungsmittel 7 ist an der Verlängerung 20 durch eine radial ausgerichtete Schraube 21 gesichert. Ferner besitzt das Befestigugsmittel 7 eine Abflachung 22, an der das Leitblech 6 mit seinem oberen Teil mittels der Schraube 23 gehalten ist.

Das Leitblech 6 ist in seinem unteren Teil so geformt, daß es mit einem Teil 24 in den Stahl der Spülflüssigkeit hineinragt. Da der Teil 24 nicht symmetrisch zur Mittelachse 16 ausgerichtet ist, werden sich beim Auftreffen des Flüssigkeitsstrahles auf den Teil 24 tangentiale Kräfte ergeben, die das Leitblech wegen der drehbaren Lagerung in Rotation versetzen. Der Teil 25 des Leitbleches ist gegenüber dem Teil 24 gewinkelt, so daß sich eine hinreichende Steifheit ergibt. Strömungstechnisch besser ist eine gerundete Form der Leitfläche, ähnlich einer Turbinenschaufelfläche.

Bei der gezeigten Anordnung lenkt das Leitblech zumindest einen Teil des Strahles in tangentialer Richtung zur Drehachse 16 um, wodurch ein Drehimpuls entsteht.

In dem Kopf 1 ist die stationäre Düse 26 eingesetzt, die einen oberen Flansch 27 besitzt, mit dem sie auf einem Absatz 28 des Grundkörpers 17 aufliegt. Der Flansch 27 kann kleine Öffnungen 29 aufweisen, durch die Spülflüssigkeit hindurchtreten kann um das Drehlager zu schmieren. Die Düse 26 erstreckt sich bis über das untere Ende des Befestigungsmittels 7 nach unten, so daß der Flüssigkeitsstrahl ungestört aus dem Kopf 1 austreten kann, bis er auf das Leitblech 6 stößt. Die Leitfläche des Leitbleches 6 ist mit 2 bezeichnet.

Die jetzt mit der Anmeldung und später eingereichten Ansprüche sind Versuche zur Formulierung ohne Präjudiz für die Erzielung weitergehenden Schutzes.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

## Patentansprüche

1. Vorrichtung zum Entfernen von Spänen, die bei der Bearbeitung von Werkstücken in Werkzeugmaschinen anfallen, wobei ein aus Spülflüssigkeit bestehender Strahl unter Druck gegen Flächen gerichtet ist, auf denen sich die Späne ablagern um diese mit der Spülflüssigkeit in Ableitungseinrichtungen für die Späne einzufördern, mit einem Spülkopf mit einer Düse, aus der die Spülflüssigkeit austritt und mit Einrichtungen zur Veränderung der Richtung des Strahles, **dadurch gekennzeichnet, daß** der aus der Düse (26) austretende Strahl gegen eine Leitfläche (2) trifft, die den Strahl ablenkt, wobei die Leitfläche (2) beweglich angeordnet ist, um die Auftreffrichtung des Strahles auf die Leitfläche (2) und damit die Ablenkung zu verändern.

2. Vorrichtung nach Anspruch 1, **dadurch gekennzeichnet, daß** die Leitfläche (2) eine gleichförmige Bewegung ausführt.

3. Vorrichtung nach einem oder beiden der vorhergehenden Ansprüche, **dadurch gekennzeichnet, daß** die Leitfläche (2) eine Drehlagerung (3, 4, 5) aufweist.

4. Vorrichtung nach einem oder mehreren der vorhergehenden Ansprüche, **gekennzeichnet durch** ein bewegliches Element (6), das die Leitfläche (2) trägt.

5. Vorrichtung nach einem oder mehreren der vorhergehenden Ansprüche, **dadurch gekennzeichnet, daß** die Leitfläche (2) vom Rückstoß der Spülflüssigkeit bewegt ist.

6. Vorrichtung nach einem oder mehreren der vorhergehenden Ansprüche, **dadurch gekennzeichnet, daß** das bewegliche Element ein Leitblech (6) ist.

7. Vorrichtung nach einem oder mehreren der vorhergehenden Ansprüche, **dadurch gekennzeichnet, daß** die Drehlagerung (3, 4, 5) der Leitfläche (2) beziehungsweise des Leitbleches (6) und die Düse (26) baulich verbunden sind.

8. Vorrichtung nach einem oder mehreren der vorhergehenden Ansprüche, **dadurch gekennzeichnet, daß** die Drehlagerung (3, 4, 5) die Düse (26) umgibt.

9. Vorrichtung nach einem oder mehreren der vorhergehenden Ansprüche, **dadurch gekennzeichnet, daß** die Drehlagerung mindestens aus einem Innenring (4) und einem Außenring (5) besteht, wobei einer der Ringe (4, 5) Befestigungsmittel (7) für die Leitfläche (2), insbesondere für das Leitblech (6) besitzt.

10. Vorrichtung nach einem oder mehreren der vorhergehenden Ansprüche, **dadurch gekennzeichnet, daß** das Leitblech (6) im spitzen Winkel zur Strahlrichtung ausgerichtet ist und von der Seite in den Spülflüssigkeitsstrahl hineinragt.

11. Vorrichtung nach einem oder mehreren der vorhergehenden Ansprüche, **dadurch gekennzeichnet, daß** die Leitfläche (2) in sich mehrfach abgewinkelt ist.

12. Vorrichtung nach einem oder mehreren der vorhergehenden Ansprüche, **dadurch gekennzeichnet, daß** die Leitfläche in sich gekrümmt ist.

13. Vorrich tung nach einem oder mehreren der vorhergehenden Ansprüche, **dadurch gekennzeichnet, daß** die Leitfläche nach Art einer Turbinenschaufelfläche geformt ist.

14. Vorrichtung nach einem oder mehreren der vorhergehenden Ansprüche, **dadurch gekennzeichnet, daß** die Drehlagerung (3, 4, 5) gegenüber der Spülflüssigkeit abgedichtet ist.

15. Vorrichtung nach einem oder mehreren der Ansprüche 1 bis 13, **dadurch gekennzeichnet, daß** die Drehlagerung (3, 4, 5) von einem Teil der Spülflüssigkeit durchströmt ist.
